# EUROPÄISCHE PATENTSCHRIFT

(11) **EP 2 660 556 B1**
(45) Veröffentlichungstag und Bekanntmachung des Hinweises auf die Patenterteilung: **03.12.2014**
(21) Anmeldenummer: 12166366.0
(22) Anmeldetag: 02.05.2012
(51) Int. Cl.: G01B 11/24, B25H 3/00, B65D 81/00, G05B 19/18

(54) **Verfahren zur Aufnahme von Umrissen von Gegenständen**
Method for recording outlines of objects
Procédé de saisie de contours d'objets

(43) Veröffentlichungstag der Anmeldung: 06.11.2013
(73) Patentinhaber: proventavia GmbH, 8841 Gross (CH)
(72) Erfinder: Staub, Theo, 8841 Gross (CH); Breitenmoser, Pablo, 4104 Oberwil (CH)
(74) Vertreter: Frischknecht, Harry Ralph

(56) Entgegenhaltungen:
- US-A- 5 428 448
- US-A1- 2002 145 103
- US-A1- 2007 083 284
- US-A1- 2010 256 790

## Beschreibung

### TECHNISCHES GEBIET

Die vorliegende Erfindung betrifft ein Verfahren zur Erfassung der Projektion von mindestens einem zu ordnenden Gegenstand in einer Projektionsebene zur Herstellung eines Ordnungssystems für die Aufnahme des mindestens einen Gegenstandes nach dem Oberbegriff von Anspruch 1 und eine Vorrichtung zur Durchführung des Verfahrens nach Anspruch 10.

### STAND DER TECHNIK

Ordnungssysteme für die Ordnung von Gegenständen, wie beispielsweise Werkzeuge, Besteck, Schreibgeräte etc. sind aus dem Stand der Technik bekannt. Mit solchen Ordnungssystemen können die zu ordnenden Gegenstände einfach in Schubladen oder anderen Behältern oder Regalen geordnet und aufbewahrt werden. Typischerweise umfassen derartige Ordnungssysteme Vertiefungen und/oder Öffnungen, in welche die Gegenstände einlegbar sind, wobei die Vertiefungen und/oder Öffnungen im Wesentlichen die Gestalt des Gegenstandes aufweisen. Die Ordnungssysteme können beispielsweise die Gestalt von Einlagen haben, welche dann in Schubladen, Koffern oder anderen Behältnissen eingelegt werden.

Die Anordnung der Gegenstände ist aber vielfach eine äusserst individuelle und benutzerorientierte Angelegenheit. Der Benutzer möchte dabei Einfluss auf die Anordnung der Gegenstände nehmen können, was gerade bei vorgefertigten Ordnungssystemen nicht der Fall ist. Ein Problem bei dieser benutzerdefinierten Anordnung ist die Erfassung der zu ordnenden Gegenstände gemäss den Benutzervorstellungen, so dass ein entsprechendes Ordnungssystem bzw. entsprechende Einlagen herstellbar ist bzw. sind.

US2010/0256790 beschreibt ein Verfahren zur Erfassung der Projektion von mindestens einem zu ordnenden Gegenstand in einer Projektionsebene zur Herstellung eines Ordnungssystems, insbesondere einer Einlage, für die Aufnahme des mindestens einen Gegenstandes. Das Verfahren umfasst die Schritten des Erfassens eines Bildes des Gegenstandes mittels eines fachüblichen Bildscanners und des Bereitstellens der Bilddaten als Fertigungsdaten für eine Fertigungsmaschine, mit welcher ein Ordnungssystem mit Vertiefungen bzw. Öffnungen basierend auf den Bilddaten herstellbar ist.

### DARSTELLUNG DER ERFINDUNG

Ausgehend von diesem Stand der Technik liegt der Erfindung eine Aufgabe zugrunde, ein Verfahren bzw. eine Vorrichtung anzugeben, mit welchem die Herstellung von einem benutzerdefinierten Ordnungssystem, beispielsweise einer Einlage oder eines anderen ordnungsdienlichen Gegenstandes für die Aufnahme von zu ordnenden Gegenständen nach Benutzervorstellung ermöglicht wird.

Eine solche Aufgabe löst das Verfahren nach Anspruch 1. Demgemäss dient ein Verfahren zur Erfassung eines Bildes der Projektion von mindestens einem zu ordnenden Gegenstand in einer Projektionsebene zur Herstellung eines Ordnungssystems, insbesondere einer Einlage, für die Aufnahme des mindestens einen Gegenstandes. Das Verfahren ist gekennzeichnet durch die Schritte
der Bereitstellung von Lichtstrahlen durch eine Lichtquelle, wobei sich die Lichtstrahlen entlang einer Lichtausbreitungsrichtung ausbreiten, wobei die Lichtstrahlen bevorzugt über Linsen umgelenkt werden;
des Anordnens von mindestens einem Gegenstand auf einer Lagerungsebene, wobei die Lagerungsebene in Lichtausbreitungsrichtung bezüglich der Lichtquelle gesehen hinter dem Gegenstand liegt und wobei die Lagerungsebene parallel zur Projektionsebene verläuft bzw. die Projektionsebene definiert bzw. aufspannt;
des Abbildens des Schattens des Gegenstandes mittels einer transluzenten Schicht, welche bezüglich der Lichtausbreitungsrichtung von der Lichtquelle her gesehen hinter dem Gegenstand liegt und parallel zur Projektionsebene verläuft;
des Erfassens eines Bildes des durch die transluzente Schicht abgebildeten Schattens des Gegenstandes mit einem Aufnahmegerät wobei Bilddaten erstellt werden; und
des Bereitstellens der Bilddaten als Fertigungsdaten für eine Fertigungsmaschine, mit welcher besagtes Ordnungssystem mit Vertiefungen bzw. Öffnungen basierend auf den Bilddaten herstellbar ist.

Durch die Erfassung der Projektion des mindestens einen zu ordnenden Gegenstandes kann ein besonders einfaches Verfahren zur Erfassung von Bilddaten des mindestens einen zu ordnenden Gegenstandes und zur anschliessenden Herstellung eines entsprechenden Ordnungssystems angegeben werden. Insbesondere entfällt eine aufwändige Nachberechnung der Objektdaten, weil die Objekte bereits in der weitestgehend korrekten Position und Form erfasst werden.

Vorzugsweise ist die Lichtquelle beabstandet zur Lagerungsebene angeordnet und/oder das Aufnahmegerät ist beabstandet zur Lagerungsebene bzw. zur transluzenten Schicht angeordnet.

Vorzugsweise folgt nach dem Schritt des Erfassens des Bildes des Schattens des Gegenstandes ein Schritt der Berechnung der Umrisskontur aus den Bilddaten vorzugsweise mittels eines digitalen Filters unter Verwendung einer Faltungsmatrix, wobei Umrissdaten erstellt werden, und die Umrissdaten der Umrisskontur werden in einem optionalen Vektorisierungsschritt vektorisiert, so dass vektorisierte Umrissdaten erstellt werden. Die Umrissdaten oder die vektorisierten Umrissdaten werden dann der Fertigungsmaschine als Fertigungsdaten bereitgestellt. Die Berechnung der Umrissdaten hat den Vorteil, dass die Datenmenge vor Übermittlung an die Fertigungsmaschine reduziert werden kann.

Alternativ werden nach dem Schritt des Erfassens des Bildes des Schattens des Gegenstandes die Bilddaten mit einem Vektorisierungsschritt vektorisiert, so dass vektorisierte Bilddaten erstellt werden, wobei diese vektorisierten Bilddaten der Fertigungsmaschine als Fertigungsdaten bereitgestellt werden.

Die Vektorisierung der Daten hat den Vorteil, dass diese für viele verschiedene Fertigungsmaschinen lesbar werden.

Bezüglich den der Fertigungsmaschine bereitgestellten Fertigungsdaten kann gesagt werden, dass die Fertigungsdaten aus der Gruppe von Bilddaten, vektorisierte Bilddaten, Umrissdaten oder vektorisierte Umrissdaten ausgewählt werden können.

Vorzugsweise werden als Fertigungsdaten besagte Bilddaten und/oder die Umrissdaten und/oder die vektorisierten Bilddaten und/oder die vektorisierten Umrissdaten in einem Schritt der Übermittlung einer Fertigungsmaschine zur Verwendung bei der Herstellung eines Ordnungssystems, insbesondere einer Einlage, übermittelt.

Bevorzugt wird nach dem Schritt des Erfassens des Bildes des Schattens das Bild bzw. die Bilddaten und/oder die Umrisskontur des Gegenstandes bzw. die Umrissdaten mit einem Faktor verändert, insbesondere vergrössert. Der Faktor ist vorzugsweise bezüglich verschiedenen Ausdehnungen des Gegenstandes in verschiedene Richtung parallel zur Lagerungsebene veränderbar. Unter einer Richtung kann beispielsweise die X- und Y-Richtung (oder deren Kombination als Vektor) in einem kartesischen Koordinatensystem verstanden werden, wobei die X- und Y-Richtung in der Lagerungsebene liegen.

Vorzugsweise werden die von der Lichtquelle bereitgestellten Lichtstrahlen vor dem Auftreffen auf die Lagerungsebene in einem Schritt der Ausrichtung durch ein optisches System umgelenkt, sodass die Lichtstrahlen parallel zueinander und senkrecht zur Lagerungsebene auf die Lagerungsebene auftreffen.

Das Aufnahmegerät ist bezüglich der Lichtausbreitungsrichtung von der Lichtquelle her gesehen hinter der transluzenten Schicht angeordnet.

Vorzugsweise ist im Bereich der Lagerungsebene eine Vermessungseinheit, insbesondere ein Referenzobjekt und/oder ein Massstab, mit einer vordefinierten Grösse bzw. Skalierung vorhanden, wobei die Bilddaten und/oder die Umrissdaten und/oder die vektorisierten Bilddaten und/oder die vektorisierten Umrissdaten anhand dieser Vermessungseinheit und/oder Massstab in einem Schritt der Skalierung auf die effektive physische Grösse des Gegenstandes skaliert werden. Das Referenzobjekt kann beispielsweise ein geometrisches Objekt sein, dessen Grösse bekannt ist. Somit können Vertiefungen bzw. Öffnungen bzw. die Umrisse der Projektionen bezüglich deren Abmessungen auf die einzulegenden Gegenstände angepasst werden.

Vorzugsweise, insbesondere bei schwierig ruhig zu lagernden abzubildenden Gegenstände, wird vor dem Schritt des Anordnens des mindestens einen Gegenstandes der besagte Gegenstand mit einem Klebemittel bzw. ein Haftungsmittel oder ein Verbindungsmittel versehen, so dass dieser reversibel auf der Lagerungsebene anklebbar bzw. haftbar ist.

Somit kann sichergestellt werden, dass der Gegenstand in der gewünschten Lage verharrt.

Vorzugsweise wird vor dem Schritt des Anordnens des mindestens einen Gegenstandes ein Schritt des Anordnens von Begrenzungselementen zur Bereitstellung von durch den Benutzer definierten physischen Grenzen ausgeführt. Alternativ können die Grenzen auch an einem Bildschirm einer Berechnungseinheit, welche die erfassten Daten darstellt und auswertet, angezeigt werden. Es handelt sich hierbei um digitale Grenzen, welche über den Bildschirm dem Benutzer in Kombination mit den über die Bilderfassung ersichtlichen abgebildeten Schatten der zu ordnenden Gegenstände zur Verfügung gestellt wird. Durch diese elektronischen Grenzen kann dem Benutzer signalisiert werden, wo, respektive innerhalb welcher Ausdehnung die Gegenstände angeordnet werden sollen um die durch den Benutzer gewünschten physikalischen Begrenzungen nicht zu überschreiten..

Vorzugsweise werden die Bilddaten und/oder die Umrissdaten und/oder die vektorisierten Bilddaten und/oder die vektorisierten Umrissdaten in einem Schritt der Ergänzung mit weiteren Elementdaten von in das Ordnungssystem bzw. in die Einlage einzuarbeitenden Elementen ergänzt. Diese Ergänzung kann vorzugsweise physisch mit der Auslegung der Objekte oder vorzugsweise elektronisch an einem Bildschirm einer Berechnungseinheit erfolgen.

Eine Vorrichtung gemäss Anspruch 10 zur Durchführung des Verfahrens zur Erfassung eines Bildes der Projektion von mindestens einem Gegenstand in einer Projektionsebene nach obiger Beschreibung umfasst eine Lichtquelle zur Bereitstellung von Lichtstrahlen, welche sich in einer Lichtausbreitungsrichtung ausbreiten, eine Lagerungsebene zur Lagerung von dem mindestens einen Gegenstand, wobei die Lagerungsebene in Lichtausbreitungsrichtung bezüglich der Lichtquelle gesehen hinter dem Gegenstand liegt, eine transluzente Schicht, die in Lichtausbreitungsrichtung bezüglich der Lichtquelle gesehen hinter dem Gegenstand liegt und parallel zur Projektionsebene liegt, wobei der Schatten des Gegenstandes durch die transluzente Schicht sichtbar wird, ein Aufnahmegerät zur Erfassung des durch die transluzente Schicht entstehenden Schattens des Gegenstandes, wobei mit dem Aufnahmegerät Bilddaten erstellbar sind und eine Einheit zur Bereitstellung der Bilddaten für eine Fertigungsmaschine, mit welcher besagtes Ordnungssystems mit Vertiefungen bzw. Öffnungen herstellbar ist.

Optional können mit besagter Einheit zur Bereitstellung je nach Ausbildung der Einheit auch zusätzliche Bearbeitungen der Bilddaten vorgenommen werden.

Vorzugsweise umfasst die Vorrichtung weiterhin eine Berechnungseinheit, wie einen Computer, mit welcher Berechnungseinheit aus den Bilddaten die Umrisskontur, vorzugsweise mittels eines digitalen Filters unter Verwendung einer Faltungsmatrix, berechenbar ist, wobei Umrissdaten erstellbar sind, und dass die Umrissdaten der Umrisskontur in einem optionalen Vektorisierungsschritt vektorisierbar sind, so dass vektorisierte Umrissdaten erstellbar sind. Die Umrissdaten bzw. die vektorisierten Umrissdaten können dabei entweder direkt oder über zusätzliche elektronische Bearbeitung der Fertigungsmaschine als Fertigungsdaten bereitgestellt werden.

Alternativ sind durch die Berechnungseinheit die Bilddaten mit einem Vektorisierungsschritt vektorisierbar, so dass vektorisierte Bilddaten erstellbar sind, wodurch der Fertigungsmaschine diese vektorisierten Bilddaten bereitgestellt werden.

Vorzugsweise umfasst die Vorrichtung weiter eine Fertigungsmaschine, wobei die Bilddaten und/oder die Umrissdaten und/oder die vektorisierten Bilddaten und/oder die vektorisierten Umrissdaten in einem Schritt der Übermittlung einer Fertigungsmaschine zur Verwendung bei der Herstellung eines Ordnungssystems, beispielsweise einer Einlage, übermittelt werden.

Vorzugsweise umfasst die Vorrichtung weiterhin ein optisches System, mit welchem die von der Lichtquelle bereitgestellten Lichtstrahlen vor dem Auftreffen auf die Lagerungsebene in mindestens einem Schritt der Ausrichtung umlenkbar bzw. ausrichtbar sind, sodass die Lichtstrahlen parallel zueinander ausgerichtet und senkrecht zur Lagerungsebene auf der Lagerungsebene auftreffen.

Vorzugsweise stehen die Lichtquelle, ggf. das optische System, die Lagerungsebene, die transluzente Schicht und das Aufnahmegerät mechanisch fest zueinander. Alternativ können die Lichtquelle und das Aufnahmegerät auch bezüglich der Lagerungsebene bewegbar in X und/oder Y Richtung der Lagerungsebene ausgebildet sein, wobei Lichtquelle und Aufnahmegerät miteinander bezüglich der Lagerungsebene vorzugsweise in identischen Geschwindigkeiten autonom oder manuell bewegbar sind um über die Bewegung die Bilddaten punktuell, Linien ausgedehnt oder Flächen ausgedehnt zu erstellen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Vorrichtung zur Erfassung der Projektion von mindestens einem Gegenstand in einer Projektionsebene, wobei das erfasste Bild zur Herstellung einer Einlage und/oder anderen ordnungsdienlichen Gegenständen eines Ordnungssystems verarbeitbar ist;
- Fig. 2: eine Draufsicht auf die Projektionsebene, auf welcher ein Werkzeug aufliegt;
- Fig. 3: eine Ansicht des durch die Vorrichtung nach Figur 1 erfassten Bildes; und
- Fig. 4: eine Ansicht einer Umrisskontur, welche aus dem Bild nach Fig. 3 berechnet wurde;
- Fig. 5: eine nach dem erfindungsgemässen Verfahren gefertigte Einlage für die Aufnahme von zu ordnenden Gegenständen; und
- Fig. 6: eine weitere Ausführungsform der Vorrichtung zur Erfassung der Projektion von mindestens einem Gegenstand in einer Projektionsebene, wobei das erfasste Bild zur Herstellung einer Einlage und/oder anderen ordnungsdienlichen Gegenständen eines Ordnungssystems verarbeitbar ist.

### BESCHREIBUNG BEVORZUGTER AUSFÜHRUNGSFORMEN

Die vorliegende Erfindung betrifft ein System bzw. ein Verfahren und eine Vorrichtung zur Erfassung von zu ordnenden Gegenständen 1 und zur anschliessenden Fertigung einer Einlage 17 für die zu ordnenden Gegenstände. Unter der Ausdrucksweise Gegenstand 1 werden jegliche zu ordnende Gegenstände verstanden, wie beispielsweise Werkzeuge, Besteck, Fertigungsmittel, etc.. Unter dem Begriff Einlage wird ein Ordnungssystem mit Öffnungen und/oder Vertiefungen verstanden, wobei die Öffnungen und/oder Vertiefungen im Wesentlichen die Form der einzulegenden Gegenstände haben sollen und entsprechend den Wünschen des Benutzers in der Einlage positioniert sein sollen. Die Einlage kann beispielsweise ein Einsatz in eine Schublade oder in einem Koffer sein. Selbstverständlich umfasst der Begriff Einlage aber alle möglichen in Ordnungssystemen einsetzbaren Einlagen.

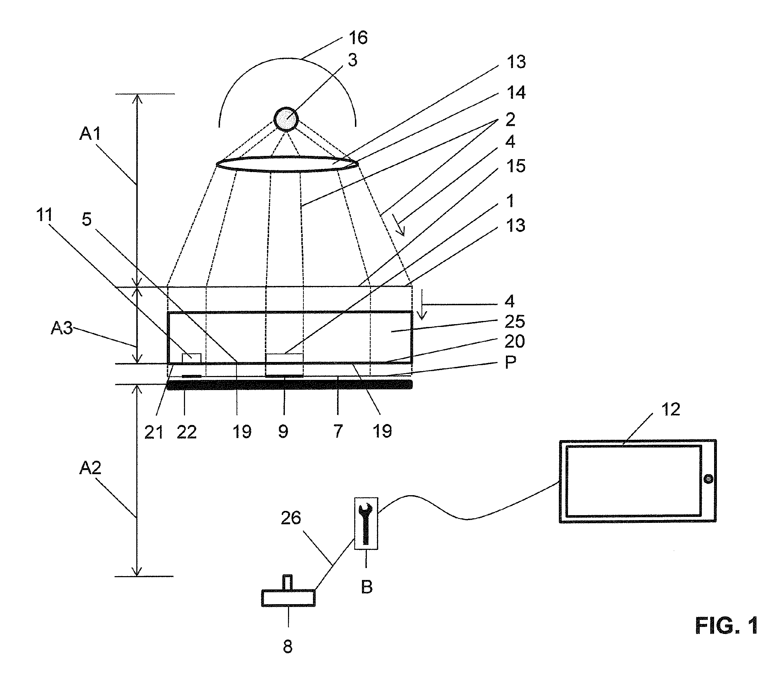

In der Figur 1 wird eine Vorrichtung zur Durchführung des erfindungsgemässen Verfahrens gezeigt. Die gezeigte Vorrichtung dient zur Erfassung der Projektion von mindestens einem zu ordnenden Gegenstand in einer Projektionsebene P. Die erfassten Bilddaten B werden dann für die Herstellung der Einlage 17 für die zu ordnenden Gegenstände, wie beispielsweise Werkzeug, Besteck, Fertigungsmittel, etc. eingesetzt.

Die Vorrichtung zur Erfassung der Projektion von mindestens einem Gegenstand 1 umfasst im Wesentlichen eine Lichtquelle 3, eine Lagerungsebene 5, eine transluzente Schicht 7 und ein Aufnahmegerät 8.

Die Lichtquelle 3 stellt eine Vielzahl von Lichtstrahlen 2 bereit, welche sich entlang einer Lichtausbreitungsrichtung 4 ausbreiten. Die Lichtstrahlen 2 treffen dabei auf den Gegenstand 1, der auf der Lagerungsebene 5 aufliegt. Das durch die Lichtquelle 3 bereitgestellte Licht kann unterschiedliche Eigenschaften aufweisen. Beispielsweise kann sowohl monochromes Licht als auch Weisslicht oder natürliches Licht eingesetzt werden. Je nach gewählter Lichtquelle und damit Wellenlänge(n) ist die Bild erfassende Einheit und ggf. die verwendeten Vorrichtungsmaterialien der Lichtquelle anzupassen.

Die Lagerungsebene 5 dient im Wesentlichen zur Lagerung von dem mindestens einen Gegenstand 1 und liegt in Lichtausbreitungsrichtung 4 von der Lichtquelle 3 her gesehen hinter dem Gegenstand 1. Die Lagerungsebene 5 ist hier beabstandet zur Lichtquelle 3 angeordnet. Bei der Ausbreitung des Lichtes treffen die Lichtstrahlen 2 dabei folglich zuerst auf den Gegenstand 1 und erst dann auf die Lagerungsebene 5. Die Lagerungsebene 5 erstreckt sich flach in einer Ebene, wobei die Ebene bezüglich der Schwerkraft üblicherweise in der Horizontalen liegt, so dass die Gegenstände 1 nicht rollen oder rutschen können.

Die transluzente Schicht 7 ist in Lichtausbreitungsrichtung 4 bezüglich der Lichtquelle 3 gesehen hinter dem Gegenstand 1 und bevorzugt auch hinter der Lagerungsebene 5 angeordnet. Dabei liegt die transluzente Schicht 7 vorzugsweise parallel zur Projektionsebene P, welche im Wesentlichen durch die Lagerungsebene 5 definiert wird. Die transluzente Schicht 7 lässt, dort wo kein Gegenstand im Weg der Lichtausbreitungsrichtung steht, das Licht passieren, wobei der Schatten des Gegenstandes 1 durch die transluzente Schicht sichtbar wird. Unter einer transluzenten Schicht wird hier eine Schicht verstanden, welche eine partielle bzw. teilweise Lichtdurchlässigkeit aufweist. Die transluzente Schicht ist dabei nicht vollständig transparent und auch nicht vollständig opak. Die transluzente Schicht kann auch als halbtransparent bezeichnet werden.

Das Aufnahmegerät 8 zur Erfassung des durch die transluzente Schicht 7 resultierenden Schattens 9 des Gegenstandes 1 ist in der vorliegenden Ausführungsform bezüglich der Lichtquelle 3 gesehen hinter der transluzenten Schicht 7 angeordnet. Das Aufnahmegerät 8 dient, wie erwähnt, zur Erfassung des Schattens 9, wobei mit dem Aufnahmegerät 8 Bilddaten B bereitstellbar sind. Die Bilddaten B zeigen im Wesentlichen den Schatten des Gegenstandes 1.

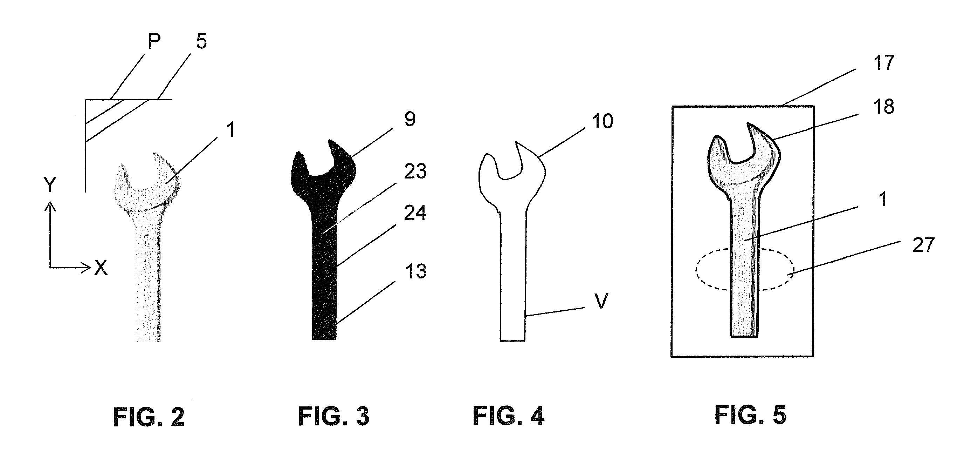

Der Gegenstand 1 liegt, wie bereits erläutert, auf der Lagerungsebene 5 auf. Dies wird in der Figur 2 entsprechend gezeigt. Die Lagerungsebene 5 ist dabei parallel zur Projektionsebene P bzw. entspricht der Projektionsebene P. In der Figur 2 wird symbolisch für den Gegenstand 1 ein Teil eines Schraubenschlüssels gezeigt. Dieser Schraubenschlüssel ist dabei der Gegenstand 1, der in einer entsprechend ausgebildeten Einlage 17 geordnet werden soll. Dabei soll die Einlage 17 eine Öffnung bzw. eine Vertiefung 18 aufweisen, welche im Wesentlichen den Umrissen des Schraubenschlüssels 1 entspricht, so dass der Schraubenschlüssel 1 bzw. der Gegenstand 1 in die Öffnung bzw. die Vertiefung 18 einlegbar ist. Diese Öffnung 18 in der Einlage 17 kann dabei mit dem nachfolgend beschriebenen Verfahren entsprechend hergestellt werden, wobei die erfindungsgemässe Vorrichtung im Wesentlichen der Erfassung der Aussenkontur des Gegenstandes dient.

In der Figur 3 wird der in der transluzenten Schicht 7 abbildbare Schatten 9 gezeigt. Es handelt sich dabei um den Schatten 9 des Schraubenschlüssels bzw. Gegenstandes 1, in der Projektionsebene P. Dieser Schatten 9 kann durch das Aufnahmegerät 8 erfasst werden, wobei dann entsprechende Bilddaten B erstellbar sind.

Die Vorrichtung umfasst weiterhin eine Berechnungseinheit 12. Die Berechnungseinheit 12 kann beispielsweise ein Computer mit entsprechender Berechnungssoftware sein. Mit der Berechnungseinheit 12 sind dabei aus den Bilddaten B die Umrisskontur 10, vorzugsweise mittels eines digitalen Filters unter Verwendung einer Faltungsmatrix, berechenbar. Aus der Umrisskontur 10 sind dabei Umrissdaten U erstellbar. Diese Umrissdaten U bzw. die Umrisskontur 10 sind in der Figur 4 entsprechend dargestellt. Anhand der Bilddaten B und/oder der Umrissdaten U kann dann die entsprechende Einlage bzw. die Öffnung 18 in der Einlage 17 gefertigt werden. Hierfür kann die Vorrichtung eine optionale Fertigungsmaschine, wie beispielsweise eine Fräsmaschine, Schneidmaschine, spanabhebende Maschine oder ähnliches, umfassen. Dabei werden die Bilddaten B oder die Umrissdaten U als Fertigungsdaten der Fertigungsmaschine zur Verwendung bei der Herstellung einer Einlage übermittelt und die Fertigungsmaschine stellt dann, basierend auf diesen Daten, die Einlage entsprechend her.

Die Vorrichtung umfasst weiterhin ein optionales optisches System 13, mit welchem die von der Lichtquelle 3 bereitgestellten Lichtstrahlen 2 vor dem Auftreffen auf die Lagerungsebene 5 entsprechend umlenkbar sind. Die Umlenkung ist dabei derart, dass die Lichtstrahlen 2 parallel zueinander und senkrecht zur Lagerungsebene 5 bzw. zur Projektionsebene P auf die Lagerungsebene 5 auftreffen. Somit wird sichergestellt, dass effektiv nur der Schatten des Gegenstandes 1 erfasst wird. Folglich wird also nur der Umriss bzw. in geometrischen Worten der Aufriss des Gegenstandes 1 in der Projektionsebene P erfasst, was den Vorteil hat, dass eine weitere Berechnung von Ausdehnungen des Gegenstandes parallel zur Projektionsebene entfallen und sehr einfaches System bereitstellbar ist. Beim erfassten Schatten handelt es sich dabei um eine grössentreue Abbildung des Gegenstandes.

Das optische System 13 umfasst hier eine Kondensorlinse 14 und eine Fresnellinse 15. Alternativ kann auch nur eine Fresnellinse oder nur eine Kondensorlinse vorgesehen sein. Die Kondensorlinse 14 ist dabei von der Lichtquelle 3 in Lichtausbreitungsrichtung 4 gesehen vor der Fresnellinse 15 angeordnet. Mit anderen Worten heisst dies, dass der Lichtstrahl 2 zuerst die Kondensorlinse 14 durchtritt und dann durch die Fresnellinse 15 tritt. Durch die Kondensorlinse 14 wird der Lichtstrahl 2 so gebrochen, dass von einer punktförmigen Lichtquelle 3 die Lichtstrahlen 2 winklig umgelenkt werden und sich sich dabei bündeln, um sich näherungsweise parallel zueinander zu erstrecken. Durch die Fresnellinse 15 werden dann die durch die Kondensorlinse 14 bereits umgelenkten Lichtstrahlen weiter umgelenkt, so dass diese Lichtstrahlen 2 dann senkrecht auf die Projektionsebene P bzw. auf die Lagerungsebene 5 auftreffen. Die Lichtstrahlen 2 verlaufen zwischen der Fresnellinse 15 und der Lagerungsebene 5 im Wesentlichen parallel zueinander. In diesem Zusammenhang sei angemerkt, dass das optische System auch anderweitig, sprich mit anderen optischen Elementen, umgesetzt werden kann. Wichtig ist aber, dass die Lichtstrahlen 2 rechtwinklig oder im Wesentlichen rechtwinklig auf die Projektionsebene P bzw. die Lagerungsebene 5 auftreffen.

Im vorliegenden Fall ist die Lichtquelle 3 eine punktförmige Lichtquelle, welche durch einen Reflektor 16 umgeben wird. Der Reflektor 16 reflektiert das Licht entsprechend und leitet es auf das optische System 13, hier auf die Kondensorlinse 14.

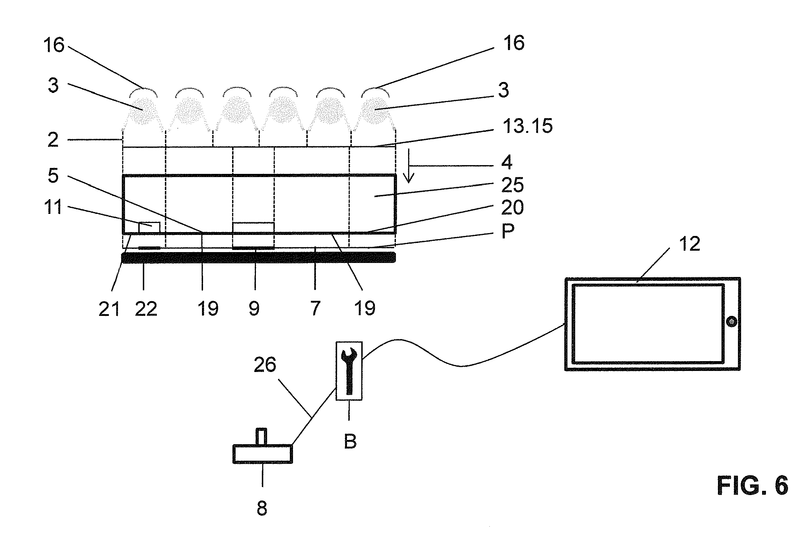

Andere Lichtquellen und/oder optische Systeme sind ebenfalls einsetzbar, wobei aber zu beachten ist, dass alle Lichtstrahlen im Wesentlichen senkrecht auf die Lagerungsebene auftreten. Dies wird untenstehend im Zusammenhang mit der Figur 6 beschrieben.

Das Aufnahmegerät 8 ist in der vorliegenden Ausführungsform bezüglich der Lichtausbreitungsrichtung 4 von der Lichtquelle 3 her gesehen hinter der transluzenten Schicht 7 angeordnet. Zwischen Aufnahmegerät 8 und der transluzenten Schicht 7 ist typischerweise ein Abstand vorhanden. Das Aufnahmegerät 8 kann beispielsweise eine herkömmliche aus dem Stand der Technik bekannte Digitalkamera sein, welche entsprechende Bilddaten B erstellt.

In der Figur 6 wird eine weitere mögliche Ausführungsform einer Vorrichtung zur Erfassung der Projektion von mindestens einem zu ordnenden Gegenstand gezeigt. Der wesentliche Unterschied zu der in Figur 1 gezeigten Vorrichtung ist die Art der Lichtquelle. Hier sind mehrere Lichtquellen 3 mit jeweils einem eigenen Reflektor 16 angeordnet. Weiter umfasst die Vorrichtung hier auch ein optisches System 13, welches hier aber nur eine Fresnellinse 15 umfasst. Alle anderen Elemente entsprechen im Wesentlichen der Ausführungsform nach der Figur 1 und gleiche Teile wurden mit gleichen Bezugszeichen versehen.

Das erfindungsgemässe Verfahren zur Erfassung der Projektion von mindestens einem zu ordnenden Gegenstand 1 in einer Projektionsebene P zur Herstellung einer Einlage 18 für die Aufnahme des mindestens einem Gegenstand 1 ist gekennzeichnet durch die Schritte:
- der Bereitstellung von Lichtstrahlen 2 durch eine Lichtquelle 3, wobei sich die Lichtstrahlen 2 entlang einer Lichtausbreitungsrichtung 4 ausbreiten,
- des Anordnens des mindestens einem Gegenstand 1 auf einer Lagerungsebene 5, wobei die Lagerungsebene 5 in Lichtausbreitungsrichtung 4 bezüglich der Lichtquelle 3 gesehen hinter dem Gegenstand 1 liegt und wobei die Lagerungsebene 5 parallel zur Projektionsebene P verläuft bzw. die Projektionsebene P aufspannt,
- des Abbildens des Schattens 9 des Gegenstandes 1 mittels der transluzenten Schicht 7, welche bezüglich der Lichtausbreitungsrichtung 5 von der Lichtquelle 3 her gesehen hinter dem Gegenstand 1 liegt und parallel zur Projektionsebene P verläuft,
- des Erfassens eines Bildes des durch die transluzente Schicht 7 abgebildeten Schattens des Gegenstandes 1 mit einem Aufnahmegerät 8, wobei Bilddaten erstellt werden und
- des Bereitstellens der Bilddaten B als Fertigungsdaten für eine Fertigungsmaschine, mit welcher besagte Einlage 18 basierend auf den Bilddaten B herstellbar ist.

Mit dem erfindungsgemässen Verfahren wird also die Projektion des Gegenstandes 1 auf der Lagerungsebene 5, welche zugleich die Projektionsebene P darstellt, erfasst. Die Erfassung der Projektion hat den Vorteil, dass bereits die effektiv gewünschte Form des Gegenstandes erfasst wird, so wie dieser dann in der Einlage 17 liegen soll. Nebenschatteneffekte entstehen durch diese Art der Erfassung fast nicht, weshalb eine aufwändige Nachberechnung der Bilddaten bezüglich Formtreue entfällt.

Ein Beispiel der erfassten Bilddaten B bzw. des erfassten Bildes des Schattens 9 wird in der Figur 3 gezeigt. Die Bilddaten B umfassen vorzugsweise eine Fläche 23 mit entsprechenden Grenzen 24, welche die Fläche 23 begrenzen.

Die Daten der Objekte können bei Vorhandensein einer Berechnungseinheit mit einem Anzeigegerät, wie beispielsweise einem Computer mit einem Bildschirm oder einem Tablet-Rechner, direkt in Echtzeit dem Benutzer auf dem Anzeigegerät angezeigt werden. Das Verfahren umfasst in diesem Fall noch einen Schritt der Anzeige der erfassten Gegenstände in Echtzeit auf dem besagten Anzeigegerät. Das hat den Vorteil, dass der Benutzer direkt die Anordnung der Gegenstände und somit das spätere Aussehen des Ordnungssystems, wie der Einlage, erkennen kann.

Nach dem Schritt des Erfassens des Bildes des Schattens 9 des besagten Gegenstandes 1 kann ein optionaler Schritt der Berechnung der Umrisskontur 10 aus den Bilddaten B folgen, wobei dann Umrissdaten U generiert werden. Die Umrisskontur 10 entspricht im Wesentlichen den Grenzen der Projektion des Gegenstandes 1. Die Umrisskontur 10 wird in der Figur 4 entsprechend dargestellt. Für die Berechnung der Umrisskontur 10 aus den Bilddaten B kann vorzugsweise eine Berechnungseinheit 12, wie beispielsweise ein Computer, eingesetzt werden. Vorzugsweise erfolgt die Berechnung der Umrisskontur 10 unter Verwendung einer Faltungsmatrix.

In einem nachfolgenden weiteren optionalen Schritt können die Umrissdaten dann mit der Berechnungseinheit 12 verktorisiert werden, wobei hier dann von einem Vektorisierungsschritt gesprochen werden kann. Mit dem Vektorisierungsschritt werden dann vektorisierte Umrissdaten erstellt. Die Umrissdaten oder die vektorisierten Umrissdaten werden dann der Fertigungsmaschine als Fertigungsdaten bereitgestellt. Folglich wird die Fertigungsmaschine dann die Einlage anhand der Umrissdaten oder der vektorisierten Umrissdaten herstellen.

Alternativ können auch die Bilddaten B mit einem Vektorisierungsschritt vektorisiert werden, so dass vektorisierte Bilddaten erstellt werden. Auch diese vektorisierten Bilddaten können dann der Fertigungsmaschine bereitgestellt werden.

Zusammenfassend kann also gesagt werden, dass verschiedene Arten von Fertigungsdaten der Fertigungsmaschine für die Herstellung der Einlage 17 bereitgestellt werden können, nämlich Bilddaten B, vektorisierte Bilddaten, Umrissdaten U und/oder vektorisierte Umrissdaten. Diese Daten werden dann in einem Schritt der Übermittlung einer Fertigungsmaschine zur Verwendung bei der Herstellung einer Einlage übermittelt.

In einem optionalen Schritt können die Bilddaten und/oder die Umrissdaten weiter verändert werden. Bevorzugterweise werden die Bilddaten B und/oder die Umrissdaten U mit einem Faktor ausgehend von der effektiven Grösse des Gegenstandes 1 skaliert, besonders bevorzugt vergrössert. Somit wird die Öffnung 18 in der Einlage 17 bezüglich der Aussenkontur des einzulegenden Gegenstandes 1 leicht grösser gefertigt, was das Einlegen und wieder Herausnehmen des Gegenstandes 1 in bzw. aus der Öffnung 18 erleichtert.

Der besagte Faktor für die Skalierung kann beispielsweise anhand der Grösse des Gegenstandes gewählt werden. Bezüglich eines kartesischen Koordinatensystems, bei welchem die X-Richtung und die Y-Richtung in der Auflageebene verlaufen kann folgendes gesagt werden. Bei einer grossen Ausdehnung in eine Richtung, in der Figur 2 beispielsweise in die Richtung Y wird der Faktor kleiner gewählt als bei einer kleine Ausdehnung in eine andere Richtung, in der Figur 2 beispielsweise in Richtung X. Folglich ist der Faktor bezüglich verschiedenen Ausdehnungen des Gegenstandes 1 in verschiedene Richtung X, Y veränderbar. Alternativ können auch fixe Werte, sogenannte Offsets, für die Skalierung eingesetzt werden. Auch kann die Skalierung in einem radialen Koordinatensystem gerechnet werden.

Vorzugsweise werden die von der Lichtquelle 3 bereitgestellten Lichtstrahlen 2 vor dem Auftreffen auf die Lagerungsebene 5 in einem Schritt der Ausrichtung durch ein optisches System 13 umgelenkt, sodass die Lichtstrahlen 2 senkrecht zur Lagerungsebene 5 auf die Lagerungsebene 5 auftreffen. Hierdurch wird effektiv nur die Projektion des Gegenstandes 1 form- und massstabtreu auf die Lagerungsebene 5 als Schatten in der transluzenten Schicht abgebildet.

Im Bereich der Lagerungsebene 5 ist vorzugsweise eine Vermessungseinheit 11, insbesondere ein Referenzobjekt 11, mit einer vordefinierten Grösse vorhanden. Diese Vermessungseinheit dient dabei als Referenz für die Skalierung der Bilddaten auf die effektive physische Grösse bei der Herstellung einer beispielsweise Einlage. Die Bilddaten und/oder die Umrissdaten und/oder die vektorisierten Bilddaten und/oder die vektorisierten Umrissdaten werden somit anhand dieser Vermessungseinheit in einem Schritt der Skalierung auf die effektive physische Grösse des Gegenstandes skaliert.

Die Vermessungseinheit 11 kann beispielsweise die Gestalt eines Referenzobjektes einer vorbestimmten Grösse haben. Das Referenzobjekt ist beispielsweise ein fest an der Lagerungsebene 5 angeordnetes oder auf der Lagerungsebene 5 aufgedrucktes Rechteck. Dabei weist das Rechteck eine vorbestimmte Länge und Breite auf, welche dann zur Skalierung einsetzbar sind. Alternativ kann die Vermessungseinheit 11 auch die Gestalt eines Massstabes aufweisen, welcher vom Aufnahmegerät 8 erfassbar ist. Der Massstab erstreckt sich dabei vorzugsweise in zwei verschiedene Richtungen, beispielsweise in die Richtung X und Y auf der Lagerungsebene 5 bzw. der Projektionsebene P. Der Massstab dient dabei als Referenzobjekt und/oder kann auch als Rahmen zur Begrenzung der Fläche, in welcher der Benutzer die Gegenstände anordnen soll, dienen.

Vor dem Schritt des Anordnens des mindestens einen Gegenstandes 1 wird der besagte Gegenstand, wenn es die Gegenstandsgestalt erfordert, vorzugsweise mit einem Klebemittel oder einem Haftungsmittel versehen, so dass dieser reversibel auf der Lagerungsebene anklebbar bzw. haftbar ist. Dies hat gerade bei zylindrischen oder kugelförmigen Gegenständen, wie beispielsweise Stecknüsse eines Steckschlüsselsatzes, den Vorteil, dass diese Gegenstände während und nach der Anordnung auf der Lagerungsebene 5 ortsfest zu dieser verharren und es nicht zu einer Verschiebung derselben auf der Lagerungsebene 5 kommt.

Vor dem Schritt des Anordnens des mindestens einen Gegenstandes 1 wird vorzugsweise ein Schritt des Anordnens von Begrenzungselementen zur Bereitstellung von durch den Benutzer physischen Grenzen ausgeführt. Wenn die Einlage beispielsweise in eine Schublade eingelegt werden soll, so können die Begrenzungselemente die Grösse der Schublade auf der Lagerungsebene entsprechend dem Benutzer signalisieren, so dass der Benutzer nicht die Gegenstände fälschlicherweise ausserhalb der Schublade anordnet. Alternativ kann die Begrenzung auch digital an einem Bildschirm der Berechnungseinheit angezeigt werden.

In einem weiteren optionalen Schritt der Ergänzung mit weiteren Elementdaten können die Bilddaten und/oder die Umrissdaten und/oder die vektorisierten Bilddaten und/oder die vektorisierten Umrissdaten von in die Einlage einzuarbeitenden Elementen ergänzt werden. Solche Elementdaten können beispielsweise Abbildungen von zusätzlich Ausnehmungen sein, welche sich quer oder längs zu einem Gegenstand 1 erstrecken, so dass zusätzlich zu den Öffnungen 18 in der Einlage 17 Mulden für die Finger des Benutzers in die Einlage einarbeitbar sind, was die Entnahme der Gegenstände 1 erleichtern soll. Eine solche zusätzliche beispielhafte Ausnehmung ist in der Figur 5 mit dem Bezugszeichen 27 gezeigt. Es handelt sich hierbei um eine Mulde, welche sich von der eigentlichen Öffnung 18 seitlich erstreckt, so dass der Benutzer das Werkzeug ergreifen kann.

Nachfolgend werden noch einige bevorzugte Ausführungen bezüglich des mechanischen Aufbaus erläutert:

Die Lagerungsebene 5 wird vorzugsweise durch eine aus einem transparenten Material gefertigte Platte 19 bereitgestellt. Die Platte 19 umfasst dabei eine Oberseite 20, welche der Lagerungsebene 5 entspricht und eine Unterseite 21. Auf der Oberseite 20 werden dann die zu ordnenden Gegenstände 1 angeordnet, weshalb der Bereich über der Oberseite 20 auch als Stauraum 25 bezeichnet werden kann. Um mögliche Brechungseffekte oder andere optische Verluste durch die Platte 19 hindurch möglichst klein zu halten, ist die Dicke der Platte 19 bezüglich der Lichtausbreitungsrichtung 4 möglichst dünn gewählt. Die Dicke ist das Mass der Platte 19 von der Unterseite 21 zur Oberseite 20. Beispielsweise beträgt die Dicke der Lagerungsebene wenige Millimeter.

Die transluzente Schicht 7 schliesst sich vorzugsweise direkt und unmittelbar an die Platte 19 an. Der Verständlichkeit halber ist die Schicht 7 in der Figur 1 beabstandet von der Platte 19 gezeigt. Vorzugsweise steht die transluzente Schicht 7 also in flächigem Kontakt mit der Unterseite 21 der Platte 19. Dabei ist die transluzente Schicht 7 auf die Unterseite 21 der Platte 19 mechanisch, beispielsweise aufgeklebt, oder stoffschlüssig, beispielsweise aufgedampft, aufgebracht. Auch ist es denkbar die transluzente Schicht 7 formschlüssig zwischen der transparenten Platte 19 und der Oberseite 22 der Platte anzuordnen.

Zum Schutz der transluzenten Schicht 7 und zur Erhöhung der Stabilität der Platte 19 kann eine optionale transparente Platte 22 vorgesehen sein. Die transparente Platte 22 schliesst sich dabei der transluzenten Schicht 7 an. Die Platte 22 steht vorzugsweise in direktem Kontakt mit der transluzenten Schicht 7.

Zur Bereitstellung der Bilddaten B, der vektorisierten Bilddaten B, der Umrissdaten U und/oder der vektorisierten Umrissdaten U umfasst die Vorrichtung eine Kommunikationseinheit 26 zur Bereitstellung der Daten für eine Fertigungsmaschine. Die besagte Kommunikationseinheit 26 kann beispielsweise ein drahtloses oder drahtgebundenes Computernetzwerk oder drahtlose oder drahtgebundene Direktverbindung sein. Die Kommunikationseinheit 26 kann auch als Einheit zur Bereitstellung der Bilddaten als Fertigungsdaten bezeichnet werden.

Von der Figur 1 kann weiterhin erkannt werden, dass die Lagerungsplatte 5 mit einem Abstand A1 beabstandet von der Lichtquelle 3 angeordnet ist. Der Abstand A1 ist je nach Ausführungsform vorzugsweise im Bereich von 500 bis 1500 mm.

Das Aufnahmegerät 8 ist, wie oben bereits erläutert, bezüglich der Lichtquelle 3 gesehen, gegenüber der Lagerungsplatte 5 angeordnet. Dabei steht das Aufnahmegerät 8 mit einem Abstand A2 von der Trägerplatte 5 bzw. von der transluzenten Schicht 7 entfernt. Der Abstand A2 ist je nach Ausführungsform vorzugsweise im Bereich von 500 bis 1500 mm. Besonders bevorzugt ist der Abstand A2 im Wesentlichen gleich dem Abstand A1.

Die Fresnellinse ist mit einem Abstand A3 über der Lagerungsebene 5 angeordnet. Der Abstand A3 ist bevorzugt zwischen 150 mm und 250 mm, kann aber auch ein anderes Mass aufweisen. Die Fresnellinse kann aber auch die Oberkante des Stauraumes bilden.

Die Lagerungsebene 5 kann in die Richtungen X und Y unterschiedliche Ausdehnungen aufweisen. Vorteilhaft sind Ausdehnungen im Bereich von 200 bis 1'500 mm, je nach Anwendungsbereich.

Bei der Erfassung von sehr kleinen Gegenständen oder bei der Erfassung von sehr grossen Gegenständen können die oben genannten Dimensionen auch angepasst, also verkleinert oder vergrössert werden.

Die verschiedenen Komponenten können zum Transport beispielsweise in einem Koffer verstaut werden und dort entsprechend gelagert sowie transportiert werden. Die Vorrichtung ist dann im Wesentlichen demontierbar und portabel ausgebildet. Dabei kann die Lichtquelle 3 gegebenenfalls mit dem Reflektor 16 und das optische System 13 mit Stäben zur Lagerungsebene 5 befestigt werden, so dass diese Komponenten entsprechend beabstandet von der Lagerungsebene 5 zu liegen kommen. Gleiches kann auch für das Aufnahmegerät 8 gesagt werden, welches ebenfalls mit Stäben zur Lagerungsebene 5 befestigbar ist.

Alternativ kann die Vorrichtung aber auch als feststehende Vorrichtung konzipiert sein.

Zusammenfassend kann bezüglich des Verfahrens und der Vorrichtung gesagt werden, dass diese die einfache und effektive Erfassung der Projektion eines zu ordnenden Gegenstandes und die anschliessende Fertigung einer Einlage erlaubt. Insbesondere entfällt durch den Schritt des Erfassens des Schattens die aufwendige Nachberechnung der Bilddaten um beispielsweise Nebenschatteneffekte aus dem Bild zu entfernen.

**BEZUGSZEICHENLISTE**

| | | | |
|---|---|---|---|
| 1 | Gegenstand | 17 | Einlage |
| 2 | Lichtstrahl | 18 | Öffnung |
| 3 | Lichtquelle | 19 | Platte |
| 4 | Lichtausbreitungsrichtung | 20 | Oberseite |
| 5 | Lagerungsebene | 21 | Unterseite |
| 7 | transluzente Schicht | 22 | Platte |
| 8 | Aufnahmegerät | 23 | Fläche |
| 9 | Schatten | 24 | Grenzen |
| 10 | Umrisskontur | 25 | Stauraum |
| 11 | Vermessungseinheit, Referenzobjekt | 26 | Kommunikationseinheit |
| 12 | Berechnungseinheit | 27 | einzuarbeitendes Element, zusätzliche Ausnehmung |
| 13 | optisches System | | |
| 14 | Kondensorlinse | B | Bilddaten |
| 15 | Fresnellinse | U | Umrissdaten |
| 16 | Reflektor | | |

## Patentansprüche

1. Verfahren zur Erfassung der Projektion von mindestens einem zu ordnenden Gegenstand (1) in einer Projektionsebene (P) zur Herstellung eines Ordnungssystems, insbesondere einer Einlage (18), für die Aufnahme des mindestens einen Gegenstandes (1), **gekennzeichnet durch** die Schritte
der Bereitstellung von Lichtstrahlen (2) **durch** eine Lichtquelle (3), wobei sich die Lichtstrahlen (2) entlang einer Lichtausbreitungsrichtung (4) ausbreiten;
des Anordnens von mindestens einem Gegenstand (1) auf einer Lagerungsebene (5), wobei die Lagerungsebene (5) in Lichtausbreitungsrichtung (4) bezüglich der Lichtquelle (3) gesehen hinter dem Gegenstand (1) liegt und wobei die Lagerungsebene (5) parallel zur Projektionsebene (P) verläuft;
des Abbildens des Schattens (9) des Gegenstandes (1) mittels einer transluzenten Schicht (7), welche bezüglich der Lichtausbreitungsrichtung (4) von der Lichtquelle (3) her gesehen hinter dem Gegenstand (1) liegt und parallel zur Projektionsebene (P) verläuft;
des Erfassens eines Bildes des **durch** die transluzente Schicht (7) abgebildeten Schattens (9) des Gegenstandes (1) mit einem Aufnahmegerät (8) wobei Bilddaten (B) erstellt werden; und
des Bereitstellens der Bilddaten (B) als Fertigungsdaten für eine Fertigungsmaschine, mit welcher besagtes Ordnungssystem (18) mit Vertiefungen bzw. Öffnungen (18) basierend auf den Bilddaten (B) herstellbar ist.

2. Verfahren nach Anspruch 1, **dadurch gekennzeichnet,**
**dass** nach dem Schritt des Erfassens des Bildes des Schattens (9) des Gegenstandes (1) ein Schritt der Berechnung der Umrisskontur (10) aus den Bilddaten (B), vorzugsweise mittels eines digitalen Filters unter Verwendung einer Faltungsmatrix, folgt, wobei Umrissdaten (U) erstellt werden, und dass die Umrissdaten (U) der Umrisskontur (10) in einem optionalen Vektorisierungsschritt vektorisiert werden, so dass vektorisierte Umrissdaten erstellt werden, wobei die Umrissdaten oder die vektorisierten Umrissdaten der Fertigungsmaschine als Fertigungsdaten bereitgestellt werden,
oder
**dass** nach dem Schritt des Erfassens des Bildes des Schattens (9) des Gegenstandes (1) die Bilddaten (B) mit einem Vektorisierungsschritt vektorisiert werden, so dass vektorisierte Bilddaten erstellt werden, wobei diese vektorisierten Bilddaten der Fertigungsmaschine als Fertigungsdaten bereitgestellt werden.

3. Verfahren nach einem der vorhergehenden Ansprüche, **dadurch gekennzeichnet, dass** als Fertigungsdaten besagte Bilddaten (B) und/oder die Umrissdaten (U) und/oder die vektorisierten Bilddaten und/oder die vektorisierten Umrissdaten in einem Schritt der Übermittlung einer Fertigungsmaschine zur Verwendung bei der Herstellung eines Ordnungssystems, insbesondere einer Einlage (17, 18), übermittelt werden.

4. Verfahren nach einem der vorhergehenden Ansprüche, **dadurch gekennzeichnet, dass** nach dem Schritt des Erfassens des Bildes des Schattens (7) das Bild bzw. die Bilddaten (B) und/oder die Umrisskontur (10) des Gegenstandes bzw. die Umrissdaten (U) mit einem Faktor verändert, insbesondere vergrössert, werden, wobei der Faktor vorzugsweise bezüglich verschiedenen Ausdehnungen des Gegenstandes (1) in verschiedene Richtung (X, Y) parallel zur Lagerungsebene (P) veränderbar ist.

5. Verfahren nach einem der vorhergehenden Ansprüche, **dadurch gekennzeichnet, dass** die von der Lichtquelle (3) bereitgestellten Lichtstrahlen (2) vor dem Auftreffen auf die Lagerungsebene (5) in einem Schritt der Ausrichtung durch ein optisches System (13) umgelenkt werden, sodass die Lichtstrahlen (2) parallel zueinander und senkrecht zur Lagerungsebene (5) auf die Lagerungsebene (5) auftreffen.

6. Verfahren nach einem der vorhergehenden Ansprüche, **dadurch gekennzeichnet, dass** das Aufnahmegerät (8) bezüglich der Lichtausbreitungsrichtung (4) von der Lichtquelle (3) her gesehen hinter der transluzenten Schicht (7) angeordnet ist.

7. Verfahren nach einem der vorhergehenden Ansprüche, **dadurch gekennzeichnet, dass** im Bereich der Lagerungsebene (5) eine Vermessungseinheit (11), insbesondere ein Referenzobjekt (11), mit einer vordefinierten Grösse vorhanden ist, wobei die Bilddaten und/oder die Umrissdaten und/oder die vektorisierten Bilddaten und/oder die vektorisierten Umrissdaten anhand dieser Vermessungseinheit in einem Schritt der Skalierung auf die effektive physische Grösse des Gegenstandes (1) skaliert wird.

8. Verfahren nach einem der vorhergehenden Ansprüche, **dadurch gekennzeichnet, dass** vor dem Schritt des Anordnens des mindestens einen Gegenstandes (1) der besagte Gegenstand mit einem Klebemittel bzw. Haftungsmittel versehen wird, so dass dieser reversibel auf der Lagerungsebene anklebbar bzw. haftbar ist und/oder dass vor dem Schritt des Anordnens des mindestens einen Gegenstandes (1) ein Schritt des Anordnens von Begrenzungselementen zur Bereitstellung von durch den Benutzer festgelegten physischen Grenzen ausgeführt wird.

9. Verfahren nach einem der vorhergehenden Ansprüchen, **dadurch gekennzeichnet, dass** die Bilddaten und/oder die Umrissdaten und/oder die vektorisierten Bilddaten und/oder die vektorisierten Umrissdaten in einem Schritt der Ergänzung mit weiteren Elementdaten von in das Ordnungssystem bzw. in die Einlage einzuarbeitenden Elementen ergänzt werden.

10. Vorrichtung zur Durchführung des Verfahren zur Erfassung der Projektion von mindestens einem Gegenstand (1) in einer Projektionsebene (P) nach Anspruch 1, umfassend
eine Lichtquelle (3) zur Bereitstellung von Lichtstrahlen (2), welche sich in einer Lichtausbreitungsrichtung (4) ausbreiten,
eine Lagerungsebene (5) zur Lagerung von dem mindestens einen Gegenstand (1), wobei die Lagerungsebene (5) in Lichtausbreitungsrichtung (4) bezüglich der Lichtquelle (3) gesehen hinter dem Gegenstand (1) liegt,
eine transluzente Schicht (7), die in Lichtausbreitungsrichtung (4) bezüglich der Lichtquelle (3) gesehen hinter dem Gegenstand (1) liegt und parallel zur Projektionsebene (P) liegt, wobei der Schatten (9) des Gegenstandes (1) durch die transluzente Schicht (7) sichtbar wird,
ein Aufnahmegerät (8) zur Erfassung des durch die transluzente Schicht (7) abbildbaren Schattens (9) des Gegenstandes (1), wobei mit dem Aufnahmegerät (8) Bilddaten (B) erstellbar sind und
eine Einheit (26) zur Bereitstellung der Bilddaten (B) als Fertigungsdaten für eine Fertigungsmaschine, mit welcher besagtes Ordnungssystems (17) mit Vertiefungen bzw. Öffnungen (18) herstellbar ist.

11. Vorrichtung nach Anspruch 10, **dadurch gekennzeichnet, dass** die Vorrichtung weiterhin eine Berechnungseinheit (12), wie einen Computer, umfasst, mit welcher Berechnungseinheit (12) aus den Bilddaten (B) die Umrisskontur (10), vorzugsweise mittels eines digitalen Filters unter Verwendung einer Faltungsmatrix, berechenbar ist, wobei Umrissdaten (U) erstellbar sind, und dass die Umrissdaten (U) der Umrisskontur (10) in einem optionalen Vektorisierungsschritt vektorisierbar sind, so dass vektorisierte Umrissdaten erstellbar sind, oder dass mit der Berechnungseinheit (12) die Bilddaten (B) mit einem Vektorisierungsschritt vektorisierbar sind, so dass vektorisierte Bilddaten erstellbar sind.

12. Vorrichtung nach Anspruch 10 oder 11, **dadurch gekennzeichnet, dass** die Vorrichtung weiterhin eine Fertigungsmaschine umfasst, wobei die Bilddaten (B) und/oder die Umrissdaten (U) und/oder die vektorisierten Bilddaten und/oder die vektorisierten Umrissdaten in einem Schritt der Übermittlung einer Fertigungsmaschine als Fertigungsdaten zur Verwendung bei der Herstellung eines Ordnungssystems, insbesondere einer Einlage, übermittelt werden.

13. Vorrichtung nach einem der Ansprüche 10 bis 12, **dadurch gekennzeichnet, dass** die Vorrichtung weiterhin ein optisches System (13) umfasst, mit welchem die von der Lichtquelle (3) bereitgestellten Lichtstrahlen (2) vor dem Auftreffen auf die Lagerungsebene (5) in einem Schritt der Ausrichtung umlenkbar sind, sodass die Lichtstrahlen (2) parallel zueinander und senkrecht zur Lagerungsebene (5) auf die Lagerungsebene (5) auftreffen.

14. Vorrichtung nach einem der Ansprüche 10 bis 13, **dadurch gekennzeichnet, dass** das Aufnahmegerät (8) bezüglich der Lichtausbreitungsrichtung (4) von der Lichtquelle (3) her gesehen hinter der transluzenten Schicht (7) angeordnet ist.

15. Vorrichtung nach einem der Ansprüche 10 bis 13, **dadurch gekennzeichnet,**
**dass** im Bereich der Lagerungsebene (5) eine Vermessungseinheit (11) mit einer vordefinierten Grösse vorhanden ist, insbesondere ein Referenzobjekt (11) oder ein Massstab, wobei die Bilddaten und/oder die Umrissdaten und/oder die vektorisierten Bilddaten und/oder die vektorisierten Umrissdaten anhand dieser Vermessungseinheit in einem Schritt der Skalierung auf die effektive physische Grösse des Gegenstandes oder auf eine gewünschte Grösse skalierbar sind und/oder dass die Vorrichtung weiter mindestens ein Begrenzungselement zur Bereitstellung von durch den Benutzer physischen Grenzen, innerhalb welchen der mindestens eine Gegenstand (1) platzierbar ist, umfasst.

## Claims

1. Method for acquiring the projection of at least one object (1), which is to be ordered, in a projection plane (P) for the purpose of producing an ordering system, in particular an insert (18), for holding the at least one object (1), **characterized by** the steps of
providing light beams (2) by means of a light source (3), the light beams (2) propagating along a light propagation direction (4);
arranging at least one object (1) on a support plane (5), the support plane (5) lying behind the object (1) when seen with reference to the light source (3) in the light propagation direction (4), and the support plane (5) running parallel to the projection plane (P);
imaging the shadow (9) of the object (1) by means of a translucent layer (7) which lies behind the object (1) when seen from the light source (3) with reference to the light propagation direction (4), and runs parallel to the projection plane (P);
acquiring an image of the shadow (9) of the object (1) imaged through the translucent layer (7) with the aid of a recorder (8), in which image data (B) are created; and
providing the image data (B) as production data for a production machine with which it is possible on the basis of the image data (B) to produce said ordering system (18) with recesses or openings (18).

2. Method according to Claim 1, **characterized in that** after the step of acquiring the image of the shadow (9) of the object (1) there follows a step of calculating the outline contour (10) from the image data (B), preferably by means of a digital filter with the use of a convolution matrix, in which outline data (U) are created, and **in that** the outline data (U) of the outline contour (10) are vectorized in an optional vectorization step so as to create vectorized outline data, the outline data or the vectorized outline data of the production machine being provided as production data,
or
**in that** after the step of acquiring the image of the shadow (9) of the object (1) the image data (B) are vectorized by a vectorization step so as to create vectorized image data, said vectorized image data of the production machine being provided as production data.

3. Method according to one of the preceding claims, **characterized in that** in a transmission step said image data (B) and/or the outline data (U) and/or the vectorized image data and/or the vectorized outline data are transmitted as production data in a production machine for use in the production of an ordering system, in particular an insert (17, 18).

4. Method according to one of the preceding claims, **characterized in that** after the step of acquiring the image of the shadow (9), the image or the image data (B) and/or the outline contour (10) of the object or the outline data (U) is/are modified, in particular enlarged, by a factor, it being possible to vary the factor, preferably with reference to various extensions of the object (1) in various directions (X, Y) parallel to the support plane (P).

5. Method according to one of the preceding claims, **characterized in that**, in a step of alignment, before striking the support plane (5) the light beams (2) provided by the light source (3) are deflected by an optical system (13) so that the light beams (2) strike the support plane (5) parallel to one another and perpendicular to the support plane (5).

6. Method according to one of the preceding claims, **characterized in that** the recorder (8) is arranged behind the translucent layer (7) with reference to the light propagation direction (4) when seen from the light source (3).

7. Method according to one of the preceding claims, **characterized in that** a measuring unit (11), in particular a reference object (11), of predefined size is present in the region of the support plane (5), the image data and/or the outline data and/or the vectorized image data and/or the vectorized outline data being scaled to the effective physical size of the object (1) in a scaling step with the aid of said measuring unit.

8. Method according to one of the preceding claims, **characterized in that** before the step of arranging the at least one object (1) said object is provided with an adhesive agent or bonding agent so that the latter can be reversibly stuck on or bonded to the support plane, and/or **in that** before the step of arranging the at least one object (1) a step of arranging delimiting elements is carried out to provide physical limits determined by the user.

9. Method according to one of the preceding claims, **characterized in that** the image data and/or the outline data and/or the vectorized image data and/or the vectorized outline data are supplemented with further element data in a supplementing step by elements to be incorporated into the ordering system or into the insert.

10. Device for carrying out the method of acquiring the projection of at least one object (1) in a projection plane (P) according to Claim 1, comprising
a light source (3) for providing light beams (2) which propagate in a light propagation direction (4),
a support plane (5) for supporting the at least one object (1), the support plane (5) lying behind the object (1) relative to the light source (3) when seen in the light propagation direction (4),
a translucent layer (7) which lies behind the object (1) when seen in the light propagation direction (4) with reference to the light source (3), and lies parallel to the projection plane (P), with the shadow (9) of the object (1) being visible through the translucent layer (7),
a recorder (8) for acquiring the shadow (9), which can be imaged through the translucent layer (7), of the object (1), it being possible to create image data (B) with the aid of the recorder (8), and
a unit (26) for providing the image data (B) as production data for a production machine which can be used to produce said ordering system (17) with recesses or openings (18).

11. Device according to Claim 10, **characterized in that** the device further comprises a calculating unit (12), such as a computer, which calculating unit (12) can be used to calculate from the image data (B) the outline contour (10), preferably by means of a digital filter with the use of a convolution matrix, it being possible to create outline data (U), and **in that** the outline data (U) of the outline contour (10) can be vectorized in an optional vectorization step so as to be able to create vectorized outline data, or **in that** the image data (B) can be vectorized by a vectorization step by means of the calculating unit (12) so as to be able to create vectorized image data.

12. Device according to Claim 10 or 11, **characterized in that** the device further comprises a production machine, in a transmission step the image data (B) and/or the outline data (U) and/or the vectorized image data and/or the vectorized outline data being transmitted as production data in a production machine for use in the production of an ordering system, in particular an insert.

13. Device according to one of Claims 10 to 12, **characterized in that** the device further comprises an optical system (13) with the aid of which it is possible for the light beams (2) provided by the light source (3) to be deflected before striking the support plane (5) in an alignment step so that the light beams (2) strike the support plane (5) parallel to one another and perpendicular to the support plane (5).

14. Device according to one of Claims 10 to 13, **characterized in that** the recorder (8) is arranged behind the translucent layer (7) with reference to the light propagation direction (4) when seen from the light source (3).

15. Device according to one of Claims 10 to 13, **characterized in that** a measuring unit (11), in particular a reference object (11) or a scale, of predefined size is present in the region of the support plane (5), the image data and/or the outline data and/or the vectorized image data and/or the vectorized outline data can be scaled to the effective physical size of the object or to a desired size in a scaling step with the aid of said measuring unit, and/or **in that** the device further comprises at least one delimiting element for providing physical limits, determined by the user, in which the at least one object (1) can be placed.

## Revendications

1. Procédé de détection de la projection d'au moins un objet (1) à classer dans un plan de projection (P) pour produire un système de classification, notamment d'un insert (18), destiné à recevoir l'au moins un objet (1), **caractérisé par** les étapes consistant à :
fournir des faisceaux lumineux (2) au moyen d'une source de lumière (3), les faisceaux lumineux (2) se propageant suivant une direction de propagation de la lumière (4) ;
disposer au moins un objet (1) sur un plan de support (5), le plan de support (5) se situant à l'arrière de l'objet (1) lorsqu'il est vu dans la direction de propagation de la lumière (4) par rapport à la source de lumière (3) et le plan de support (5) s'étendant parallèlement au plan de projection (P) ;
former l'image de l'ombre (9) de l'objet (1) à travers une couche translucide (7) qui se situe à l'arrière de l'objet (1) lorsqu'il est vu depuis la source de lumière (3) par rapport à la direction de propagation de la lumière (4) et s'étend parallèlement au plan de projection (P) ;
détecter une image de l'ombre (9) de l'objet (1) formée à travers la couche translucide (7) au moyen d'un appareil d'acquisition (8), des données d'images (B) étant créées ; et
fournir les données d'images (B) sous la forme de données de production pour une machine de production au moyen de laquelle ledit système de classification (18) peut être produit sur la base des données d'images (B) avec des cavités ou des ouvertures (18).

2. Procédé selon la revendication 1, **caractérisé en ce que**,
après l'étape de détection de l'image de l'ombre (9) de l'objet (1), une étape de calcul du contour périmétrique (10) est effectuée à partir des données d'images (B), de préférence au moyen d'un filtre numérique en utilisant une matrice de convolution, les données périmétriques (U) étant créées, et **en ce que** les données périmétriques (U) du contour périmétrique (10) sont vectorisées lors d'une étape de vectorisation facultative, de manière à créer des données périmétriques vectorisées, les données périmétriques ou les données périmétriques vectorisées étant fournies à la machine de production en tant que données de production,
ou
**en ce qu'**après l'étape de détection de l'image de l'ombre (9) de l'objet (1), les données d'images (B) sont vectorisées par une étape de vectorisation de manière à créer des données d'images vectorisées, lesdites données d'images vectorisées étant fournies à la machine de production en tant que données de production.

3. Procédé selon l'une quelconque des revendications précédentes, **caractérisé en ce que** l'on transmet en tant que données de production lesdites données d'images (B) et/ou les données périmétriques (U) et/ou les données d'images vectorisées et/ou les données périmétriques vectorisées lors d'une étape de transmission à une machine de production en vue de leur utilisation lors de la production d'un système de classification, notamment d'un insert (17, 18).

4. Procédé selon l'une quelconque des revendications précédentes, **caractérisé en ce qu'**après l'étape de détection de l'image de l'ombre (9), l'image ou les données d'images (B) et/ou le contour périmétrique (10) de l'objet ou les données périmétriques (U) sont modifiées et notamment agrandies d'un certain facteur, le facteur pouvant de préférence être modifié par rapport à des dimensions différentes de l'objet (1) dans des directions différentes (X, Y) parallèlement au plan de support (P).

5. Procédé selon l'une quelconque des revendications précédentes, **caractérisé en ce que** les faisceaux lumineux (2) fournis par la source de lumière (3) sont déviés avant leur incidence sur le plan de support (5) lors d'une étape d'orientation par un système optique (13), de manière à ce que les faisceaux lumineux (2) soient incidents parallèlement les uns aux autres et perpendiculairement au plan de support (5) sur le plan de support (5).

6. Procédé selon l'une quelconque des revendications précédentes, **caractérisé en ce que** l'appareil d'acquisition (8) est agencé à l'arrière de la couche translucide (7) telle qu'elle est vue depuis la source de lumière (3) par rapport à la direction de propagation de la lumière (4).

7. Procédé selon l'une quelconque des revendications précédentes, **caractérisé en ce que**, dans la région du plan de support (5), se trouve une unité de mesure (11), notamment un objet de référence (11), ayant une taille prédéfinie, les données d'images et/ou les données périmétriques et/ou les données d'images vectorisées et/ou les données périmétriques vectorisées étant mises à l'échelle sur la base de ladite unité de mesure lors d'une étape de mise à l'échelle par rapport à la taille physique effective de l'objet (1).

8. Procédé selon l'une quelconque des revendications précédentes, **caractérisé en ce que**, avant l'étape d'agencement de l'au moins un objet (1), ledit objet est muni d'un moyen de collage ou d'un moyen adhésif de manière à ce qu'il puisse être collé ou être amené à adhérer au plan de support et/ou à ce qu'avant l'étape d'agencement de l'au moins un objet (1), une étape d'agencement d'éléments de délimitation soit exécutée pour fournir des limites physiques établies par l'utilisateur.

9. Procédé selon l'une quelconque des revendications précédentes, **caractérisé en ce que** les données d'images et/ou les données périmétriques et/ou les données d'images vectorisées et/ou les données périmétriques vectorisées sont complétées, lors d'une étape d'ajout par des données d'éléments supplémentaires constituées d'éléments à introduire dans le système de classification ou dans l'insert.

10. Dispositif destiné à mettre en oeuvre le procédé de détection de la projection d'au moins un objet (1) dans un plan de projection (P) selon la revendication 1, comprenant
une source de lumière (3) destinée à fournir des faisceaux lumineux (2) qui se propagent dans une direction de propagation de la lumière (4),
un plan de support (5) destiné au stockage d'au moins un objet (1), le plan de support (5) se situant à l'arrière de l'objet (1) tel qu'il est vu dans la direction de propagation de la lumière (4) par rapport à la source de lumière (3),
une couche translucide (7) qui se situe à l'arrière de l'objet (1) tel qu'il est vu dans la direction de propagation de la lumière (4) par rapport à la source de lumière (3) et s'étend parallèlement au plan de proj ection (P), l'ombre (9) de l'objet (1) pouvant être vue à travers la couche translucide (7),
un appareil d'acquisition (8) destiné à détecter l'ombre (9) de l'objet (1) dont l'image peut être formée à travers la couche translucide (7), des données d'images (B) pouvant être créées au moyen de l'appareil d'acquisition (8), et
une unité (26) destinée à fournir les données d'images (B) en tant que données de production à une machine de production au moyen de laquelle ledit système de classification (17) peut être produit avec des cavités ou des ouvertures (18).

11. Dispositif selon la revendication 10, **caractérisé en ce que** le dispositif comprend en outre une unité de calcul (12) telle qu'un ordinateur, unité de calcul (12) au moyen de laquelle le contour périmétrique (10) peut être calculé à partir des données d'images (B) par utilisation d'une matrice de convolution, de préférence au moyen d'un filtre numérique, des données périmétriques (U) pouvant être créées, et **en ce que** les données périmétriques (U) du contour périmétrique (10) peuvent être vectorisées lors d'une étape de vectorisation facultative de manière à créer des données périmétriques vectorisées, ou **en ce que** les données d'images (B) peuvent être vectorisées au moyen de l'unité de calcul (12) lors d'une étape de vectorisation de manière à créer des données d'images vectorisées.

12. Dispositif selon la revendication 10 ou 11, **caractérisé en ce que** le dispositif comprend en outre une machine de production, les données d'images (B) et/ou les données périmétriques (U) et/ou les données d'images vectorisées et/ou les données périmétriques vectorisées étant transmises lors d'une étape de transmission à une machine de production en tant que données de production en vue de leur utilisation lors de la production d'un système de classification, notamment d'un insert.

13. Dispositif selon l'une quelconque des revendications 10 à 12, **caractérisé en ce que** le dispositif comprend en outre un système optique (13) au moyen duquel les faisceaux lumineux (2) fournis par la source de lumière (3) peuvent être déviés avant leur incidence sur le plan de support (5) lors d'une étape d'orientation, de manière à ce que les faisceaux lumineux (2) soient incidents parallèlement les uns aux autres et perpendiculairement au plan de support (5) sur le plan de support (5).

14. Dispositif selon l'une quelconque des revendications 10 à 13, **caractérisé en ce que** l'appareil d'acquisition (8) est agencé à l'arrière de la couche translucide (7) telle qu'elle est vue depuis la source de lumière (3) par rapport à la direction de propagation de la lumière (4).

15. Dispositif selon l'une quelconque des revendications 10 à 13, **caractérisé en ce que**, dans la région du plan de support (5), se trouve une unité de mesure (11) ayant une taille prédéfinie, notamment un objet de référence (11), ou une échelle graduée, les données d'images et/ou les données périmétriques et/ou les données d'images vectorisées et/ou les données périmétriques vectorisées pouvant être mises à l'échelle sur la base de ladite unité de mesure lors d'une étape de mise à l'échelle par rapport à la taille physique effective de l'objet ou par rapport à une taille souhaitée et/ou **en ce que** le dispositif comprend en outre d'au moins un élément de délimitation permettant de fournir des limites physiques établies par l'utilisateur à l'intérieur desquelles l'au moins un objet (1) peut être placé.
